(19) Europäisches Patentamt
European Patent Office
Office européen des brevets

(11) Veröffentlichungsnummer: **0 429 956 A2**

# (12) EUROPÄISCHE PATENTANMELDUNG

(21) Anmeldenummer: **90121788.5**

(22) Anmeldetag: **14.11.90**

(51) Int. Cl.$^5$: **C08L 67/02**, C08L 25/12, C08L 51/04

(30) Priorität: **25.11.89 DE 3939047**

(43) Veröffentlichungstag der Anmeldung: **05.06.91 Patentblatt 91/23**

(84) Benannte Vertragsstaaten: **BE DE FR GB NL Patentblatt**

(71) Anmelder: **BASF Aktiengesellschaft**
**Carl-Bosch-Strasse 38**
**W-6700 Ludwigshafen(DE)**

(72) Erfinder: **Mc Kee, Graham Edmund, Dr.**
**Kastanienweg 8**
**W-6940 Weinheim(DE)**
Erfinder: **Pipper, Gunter**
**Schlangenthaler Weg 10**
**W-6702 Bad Duerkheim(DE)**
Erfinder: **Knoll, Manfred**
**Pfrimmstrasse 1**
**W-6521 Wachenheim(DE)**

## (54) Thermoplastische Formmassen auf der Basis von Polyester und Styrol/Acrylnitril-Copolymerisaten.

(57) Thermoplastische Formmasen, erhältlich durch thermische Behandlung einer Mischung aus Polyestern A), ggf. Pfropfpolymerisaten B und Styrol-Copolymerisaten C) bei Temperaturen von 50 °C unterhalb bis 100 °C oberhalb des Schmelzpunkts der Komponente A) über einen Zeitraum von 10 min - 100 Stunden.

EP 0 429 956 A2

# THERMOPLASTISCHE FORMMASSEN AUF DER BASIS VON POLYESTER UND STYROL/ACRYLNITRIL-COPOLYMERISATEN

Die vorliegende Erfindung betrifft thermoplastische Formmasen, erhältlich durch thermische Behandlung einer Mischung aus

A) 0 bis 90 Gew.-% eines Polyesters

B) 5 bis 90 Gew.-% eines Pfropfpolymerisats aufgebaut aus

$b_1$) 30 bis 90 Gew.-% einer Pfropfgrundlage aus einem kautschukelastischen Polymeren mit einer Glasübergangstemperatur von unter 0 °C

$b_2$) 10 bis 70 Gew.-% einer Pfropfauflage aus

$b_{21}$) 50 bis 90 Gew.% Styrol oder substituierten Styrolen der allgemeinen Formel I

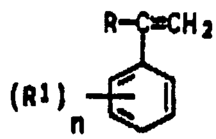

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen,

$b_{22}$) 10 bis 50 Gew.% Acrylnitril oder Methacrylnitril oder deren Mischungen

$b_{23}$) 0 bis 30 Gew.% eines polymerisierbaren Monomeren mit Carboxyl-, Carboxylderivat-, Hydroxyl- oder Epoxygruppen,

und

C) 5 bis 90 Gew.% eines Copolymerisats aus

$c_1$) 50 bis 90 Gew.% Styrol oder substituierten Styrolen der allgemeinen Formel I oder deren Mischungen und

$c_2$) 10 bis 49 Gew.% Acrylnitril oder Methacrylnitril oder deren Mischungen,

$c_3$) 0 bis 30 Gew.% eines polymerisierbaren Monomeren mit Carboxyl-, Carboxylderivat-, Hydroxyl- oder Epoxygruppen,

und

D) 0 bis 50 Gew.% faser- oder teilchenförmigfe Füllstoffe oder deren Mischungen

bei einer Temperatur im Bereich von 50 °C unterhalb bis 100 °C oberhalb des Schmelzpunkts der Komponente A) über einen Zeitraum von 10 min bis 100 Stunden.

Aus der EP-A 139 084 ist ein Verfahren zur Herstellung von kerbschlagzähen Formmassen bekannt, wobei Mischungen aus 70 - 90 Gew.% eines Polyalkylenterephthalats und 5 - 30 Gew.-% eines Acrylat-Propfcopolymeren bei Temperaturen von 15 - 60 °C unterhalb des Schmelzpunkts des Polyesters in einer Inertgasatmosphäre thermisch behandelt werden.

In der EP-A 142 675 werden Formmassen aus thermoplastischem Polyester und Pfropfkautschuk beschrieben, die infolge einer thermischen Behandlung einen bestimmten Mindest-Ankopplungsgrad aufweisen.

Schließlich ist aus der EP-A 141 016 ein Verfahren analog zur oben genannten EP-A 139 084 bekannt, wobei anstelle des Acrylat-Pfropfpolymeren ein $\alpha$-Olefin-Copolymer eingesetzt wird.

Aus der DE-A 27 58 497 sind thermoplastische Formmassen auf der Basis von Polyestern, Pfropfpolymerisaten und Styrol/Acrylnitril-Copolymerisaten bekannt. Eine thermische Behandlung zur Verbesserung der Eigenschaften wird nicht erwähnt.

Diese bekannten Produkte weisen gegenüber den einfachen Abmischungen aus den Bestandteilen zwar verbesserte Schlagzähigkeitseigenschaften auf, doch wäre es für manche Anwendungen wünschenswert, das Eigenschaftsspektrum in Richtung Steifigkeit und Wärmeformbeständigkeit zu optimieren.

Aufgabe der vorliegenden Erfindung war es daher, thermoplastische Formmassen auf der Basis von Polyestern und Styrol/Acrylnitril-Copolymerisaten zur Verfügung zu stellen, die in dieser Richtung optimiert sind.

Diese Aufgabe wird erfindungsgemäß gelöst durch die eingangs definierten thermoplastischen Formmassen gemäß Anspruch 1.

Bevorzugte Massen dieser Art sind den Unteransprüchen zu entnehmen.

Als Komponente A enthalten die erfindungsgemäßen Formmassen 5 bis 90, insbesondere 10 bis 70

und besonders bevorzugt 15 bis 55 Gew.% eines Polyesters.

Derartige Polyester A sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$-$C_6$-Diolkomponente, z.B. Polyethylenterephthalat, Polyethylennaphthalat oder Polybutylenterephthalat oder deren Mischungen werden besonders bevorzugt.

Die Viskositätszahl (VZ) der Polyester, gemessen an einer 0,5 gew.%igen Lösung in einem Phenol/o-Dichlorbenzolgemisch (Gewichtsverhältnis 1:1) bei 25 °C, liegt im allgemeinen im Bereich von 30 bis 140, vorzugsweise von 40 - 90 $cm^3/g$, besonders bevorzugt von 40 - 80 $cm^3/g$.

Als vorteilhaft hat es sich weiter erwiesen, wenn die Polyester A) vor der thermischen Behandlung ein Endgruppenverhältnis der OH- zu den COOH-Endgruppen von mindestens 0,2, bevorzugt mindestens 0,3 aufweisen.

Als Komponente B) können die erfindungsgemäßen thermoplastischen Formmassen 0 bis 90, vorzugsweise 5 - 90 und insbesondere 25 - 70 Gew.% eines Pfropfpolymerisats, aufgebaut aus

b1) 30 bis 90 Gew.%, vorzugsweise 40 bis 80 Gew.% einer Pfropfgrundlage aus einem kautschukelastischen Polymeren mit einer Glasübergangstemperatur von unter 0 °C

$b_2$) 10 - 70 Gew.%, vorzugsweise 20 - 60 Gew.% aus

$b_{21}$ 50 - 90, vorzugsweise 60 - 80 Gew.% Styrol oder substituierten Styrolen der allgemeinen Formel I oder deren Mischungen

$b_{22}$) 10 bis 50, vorzugsweise 20 - 40 Gew.% Acrylnitril oder Methacrylnitril oder deren Mischungen und

$b_{23}$) 0 bis 30, vorzugsweise bis zu 20 Gew.% eines polymerisierbaren Monomeren mit Carboxyl-, Carboxylderivat-, Hydroxyl- oder Epoxygruppen,

enthalten.

Für die Pfropfgrundlage $b_1$) kommen Polymerisate in Frage, deren Glasübergangstemperatur unterhalb von 0 °C, vorzugsweise unterhalb von -20 °C liegt. Dies sind z.B. Naturkautschuk, Synthesekautschuke auf der Basis von konjugierten Dienen, ggf. mit anderen Copolymeren sowie Elastomere auf der Basis von $C_1$-$C_8$-Alkylestern der Acrylsäure oder Methacrylsäure, die ggf. ebenfalls weitere Comonomere enthalten können.

Weitere Beispiele sind Ethylen/Propylen (EP) oder Ethylen-Propylen-Dien Kautschuke (EPDM), wie sie kommerziell erhältlich sind oder Silikonkautschuke wie sie in der EP-A-231 776 beschrieben werden.

Elastomere des letztgenannten Typs werden vorzugsweise vernetzt, was durch Mitverwendung von mindestens difunktionellen Monomeren erfolgen kann, die vorzugsweise zur Copolymerisation befähigte ethylenische Doppelbindungen enthalten.

Beispielsweise seien Divinylbenzol, Diallylmaleat, Diallylfumarat, Dialkylphthalat, Triallyl(iso)cyanurat, Tricyclodecenylacrylat, Butadien und Dihydrodicyclopentadienylacrylat genannt. Der Anteil an solchen Monomeren, nachstehend bei der Beschreibung der bevorzugten Pfropfgrundlagen mit $b_{12}$) bzw. $b_{15}$) bezeichnet, beträgt im allgemeinen 0,1 bis 5, vorzugsweise 0,5-4 Gew.%, bezogen auf die Gesamtmenge der Monomeren für die Pfropfgrundlage.

Nachstehend werden zwei besonders bevorzugte Arten von Pfropfgrundlagen beschrieben.

Zum einen sind dies Pfropfgrundlagen aus

$b_{11}$) 95 - 99,9 Gew.% eines $C_1$-$C_8$-Alkylesters der Acrylsäure oder Methacrylsäure oder deren Mischungen, insbesondere n-Butylacrylat und/oder 2-Ethylhexylacrylat, und

$b_{12}$) 0,1 - 5 Gew.% eines difunktionellen Monomeren, vorzugsweise Dihydrodicyclopentadienylacrylat oder Tricylodecenylacrylat oder deren Mischungen.

Eine andere bevorzugte Gruppe sind Pfropfgrundlagen auf der Basis von

$b_{13}$) 50 - 100 Gew.% eines konjugierten Diens, vorzugsweise Butadien-1,3,

$b_{14}$) 0 - 50 Gew.% Styrol, Acrylnitril, Methacrylnitril und/oder $C_1$-$C_8$-Alkylestern der Acrylsäure oder Methacrylsäure und

$b_{15}$) 0 - 5 Gew.% eines vernetzenden Monomeren.

Pfropfgrundlagen der beiden vorgenannten Arten sind an sich bekannt und in der Literatur beschrieben, beispielsweise in der DE-PS 24 44 584 und der DE-PS 12 60 135 und der EP-A-1245 um nur drei Beispiele zu nennen.

Auf die Pfropfgrundlage $b_1$) ist eine Pfropfhülle $b_2$) aufgepfropft, die durch Copolymerisation von

$b_{21}$) 50 - 90, vorzugsweise 60 bis 80 und insbesondere 65 bis 80 Gew.% Styrol oder substitierten Styrolen der allgemeinen Formel I

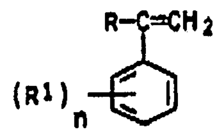

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$b_{22}$) 10 bis 50, vorzugsweise 20 bis 40 und insbesondere 20 bis 35 Gew.% Acrylnitril oder Methacrylnitril oder deren Mischungen und

$a_{23}$) 0 bis 30 Gew.% eines polymerisierbaren Monomeren mit Carboxyl-, Carboxylderivat-, Hydroxyl- oder Epoxygruppen erhältlich ist.

Beispiele für substituierte Styrole der allgemeinen Formel I sind α-Methylstyrol, p-Methylstyrol, p-Chlorstyrol und p-Chlor-α-Methylstyrol, wovon Styrol und α-Methylstyrol bevorzugt werden.

Die Pfropfhülle $b_2$) kann in einem oder in mehreren, z.B. zwei oder drei, Verfahrensschritten hergestellt werden, die Bruttozusammensetzung bleibt davon unberührt.

Falls Monomere $b_{23}$) vorhanden sind, beträgt deren Anteil an der Pfropfhülle $b_2$) 0,1 bis 30, vorzugsweise 0,2 bis 20 und insbesondere 0,5 bis 10 Gew.%, bezogen auf das Gesamtgewicht von $b_2$).

Beispiele für Monomere $b_{23}$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure, (Meth)acrylsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren $b_{23}$) sind Lactamgruppen enthaltende Monomere geeignet.

Diese enthalten eine Lactamgruppe der allgemeinen Formel

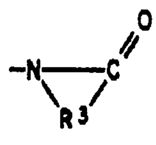

wobei $R^3$ eine verzweigte oder lineare Alkylengruppe mit 2 bis 15 C-Atomen darstellt.

Nur stellvertretend seien hier β-Propiolactame (Azetidin-2-one) der allgemeinen Formel

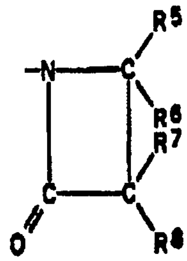

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Ein Beispiel hierfür ist 3,3'-Dimethyl-3-propiolactam.

Weitere geeignete Lactame sind

ε-Caprolactam

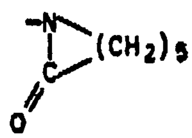

,

2-Pyrrolidone

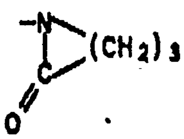

,

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in

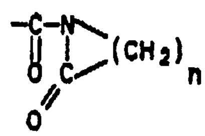

über eine Carbonylgruppe am Stickstoff in die entsprechenden Monomeren eingebaut.

Ein besonders bevorzugtes Beispiel hierfür ist N-(Meth)acryloyl-ε-Caprolactam

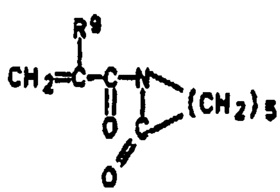

wobei $R^9$ ein Wasserstoffatom oder eine Methylgruppe ist.

Bevorzugte Monomere $b_{23}$) sind Glycidylester der Acrylsäure und Methacrylsäure, Maleinsäureanhydrid, tert.-Butylacrylat, Fumarsäure und Maleinsäure.

Vorzugsweise wird die Pfropfhülle in Emulsion oder in Lösung hergestellt, wie dies z.B. in der DE-PS 1 260 135, DE-OS 32 27 555, und der DE-OS 34 14 118 beschrieben ist. Bei der sogenannten Lösungspolymerisation wird die Pfropfgrundlage in einer Lösung der Pfropfmonomeren für die Pfropfauflage gelöst, wonach diese polymerisiert werden. Die Verfahrensbedingungen sind der Encyclopedia of Polymer Science and Engineering, Band 1, Seiten 406 - 408 zu entnehmen.

Je nach den gewählten Bedingungen entsteht bei der Pfropfmischpolymerisation ein bestimmter Anteil an freien Copolymerisaten der Monomeren $b_{21}$), $b_{22}$) und $b_{23}$).

Das Pfropfmischpolymerisat ($b_1$ + $b_2$) weist im allgemeinen eine mittlere Teilchengröße von 0,09 bis 10 µm, im besonderen von 0,1 bis 0,8 µm ($d_{50}$-Gewichtsmittelwert) auf. Die Bedingungen bei der Herstellung des Elastomeren $b_1$) und bei der Pfropfung werden daher vorzugsweise so gewählt, daβ

Teilchengrößen in diesem Bereich resultieren. Maßnahmen hierzu sind bekannt und z.B. in der DE-PS 1 260 135, der DE-AS 24 27 960 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat B zählen im Rahmen dieser Erfindung auch die bei der Pfropfmischpolymerisation zur Herstellung der Komponente $b_2$) entstehenden freien, nicht gepfropften Homo- und Copolymerisate.

Nachstehend seien einige bevorzugte Pfropfpolymerisate angeführt:

B/1 60 Gew.% Pfropfgrundlage $b_1$) aus

$b_{11}$) 98 Gew.% n-Butylacrylat und

$b_{12}$) 2 Gew.% Dihydrodicyclopentadienylacrylat und 40 Gew.% Pfropfhülle $b''$) aus

$b_{21}$) 71 Gew.% Styrol und

$b_{22}$) 24 Gew.% Acrylnitril

$b_{23}$) 5 Gew.% Glycidylmethacrylat

B/2 Pfropfgrundlage wie bei B/1 mit 5 Gew.% einer ersten Pfropfhülle aus Styrol und 35 Gew.% einer zweiten Pfropfstufe aus

$b_{21}$) 71 Gew.% Styrol und

$b_{22}$) 24 Gew.% Acrylnitril

$b_{23}$) 5 Gew.% Glycidylmethacrylat

B/3 Pfropfgrundlage wie bei B/1 mit 13 Gew.% einer ersten Pfropfstufe aus Styrol und 27 Gew.% einer zweiten Pfropfstufe aus Styrol und Acrylnitril im Gewichtsverhältnis 72:28.

Als Komponente C enthalten die erfindungsgemäpen Formmassen 5 bis 90, vorzugsweise 20 bis 70 Gew.% eines Copolymerisats aus

$c_1$) 50 bis 90, vorzugsweise 55 bis 90 und insbesondere 65 bis 80 Gew.% Styrol und/oder substituierten Styrolen der allgemeinen Formel I und

$c_2$) 10 bis 50, vorzugsweise 10 bis 45 und insbesondere 20 bis 35 Gew.% Acrylnitril und/oder Methacrylnitril.

$c_3$) 0 bis 30 Gew.% eines polymerisierbaren Monomeren mit Carboxyl-, Carboxylderivat-, Hydroxyl- oder Epoxygruppen.

Hinsichtlich der Monomeren $c_3$) gilt das vorstehend für die Komponente $b_{23}$) Gesagte, worauf hier zur Vermeidung von Wiederholungen vermieden wird.

Derartige Produkte können z.B. nach dem in den DE-AS 10 01 001 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Als Komponente D können die erfindungsgemäßen Formmassen bis zu 50, insbesondere 7 bis 45 und besonders bevorzugt 10 bis 40 Gew.%, faser- oder teilchenförmige Füllstoffe oder deren Mischungen bezogen auf das Gesamtgewicht der Formmassen enthalten. Dabei handelt es sich vorzugsweise um kommerziell erhältliche Produkte.

Besonders bevorzugt als Komponente D sind Glasfasern; diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten A), ggf. B) und C) und D) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B.

Chloriden, Bromiden oder Jodiden. Ferner sind geeignete Stabilisatoren sterisch gehinderte Phenole, Hydrochinone, verschiedene substituierte Vertreter dieser Gruppe und Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 4 Gew.% der thermoplastischen Masse zugesetzt werden, sind unter anderem Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.%, bezogen auf die Formmasse, zugesetzt. Färbemittel, wie Farbstoffe und Pigmente können in Mengen bis zu etwa 5 Gew.%, bezogen auf die Formmasse, zugesetzt werden.

Die erfindungsgemäßen Formmassen sind erhältlich, indem man Mischungen aus den vorstehend beschriebenen Komponenten D) bei einer Temperatur von 50 °C, vorzugsweise 10 - 30 °C unterhalb bis 100 °C, vorzugsweise 80 °C oberhalb des Schmelzpunkts des Polyesters A) über einen Zeitraum von 10 min - 100 h, vorzugsweise 20 min - 70 h und insbesondere 20 min - 50 h, vorzugsweise unter Inertgasatmosphäre thermisch behandelt. Im allgemeinen kann bei steigender Behandlungstemperatur der Wärmebehandlung deren Zeitdauer entsprechend verringert werden.

Dabei ist es auch möglich, nach der thermischen Behandlung dem erhaltenen Produkt weitere Mengen an den den Komponenten A), B) oder C) zuzugeben, um ein gewünschtes Mischungsverhältnis einzustellen, d.h. man kann zunächst ein Konzentrat, welches alle 3 Komponenten A) - C) enthält, thermisch behandeln und anschließend "verdünnen", um ein bestimmtes Mengenverhältnis zu erreichen. Die Ausgangsmischungen mit den Komponenten A) - C) werden vorzugsweise auf einem Extruder hergestellt. Entsprechende Verfahren sind an sich bekannt und in der Literatur beschrieben.

Die ggf. vorhandene Komponente D) kann vor oder nach der thermischen Behandlung zugegeben werden.

Die erfindungsgemäßen thermoplastischen Formmassen zeichnen sich durch ein insgesamt ausgewogenes Eigenschaftsspektrum aus und eignen sich zur Herstellung von Fasern, Folien und Formkörpern.

Beispiele:

Es wurden folgende Komponenten eingesetzt:

A/1 Polybutylenterephthalat mit einer Viskositätszahl von 47 $cm^3/g$, gemessen an einer 0,5 gew.-%igen Lsg. in einem Phenol-/o-Dichlorbenzolgemisch (Gew.-Verh. 1 : 1 bei 25 °C)

A/2 Polybutylenterephthalat mit einer Viskositätszahl von 107 $cm^3/g$, gemessen wie bei A/1.

A/3 A/1 nach einer thermischen Behandlung von 3 Stunden bei 190 °C und 20 Stunden bei 215 °C

A/4 A/1 nach einer thermischen Behandlung von 3 Stunden bei 190 °C und 48 Stunden bei 215 °C

B/1 Pfropfkautschuk aufgebaut aus

- $b_1$) 60 Gew.% einer Pfropfgrundlage aus
  - $b_{11}$) 98 Gew.% n-Butylacrylat und
  - $b_{12}$) 2 Gew.% Dihydrocyclopentadienylacrylat

  und
- $b_2$) 40 Gew.% einer Pfropfhülle aus
  - $b_{21}$) 75 Gew.% Styrol und
  - $b_{22}$) 25 Gew.% Acrylnitril

hergestellt in Emulsion nach dem in der DE-A-24 44 584 beschriebenen Verfahren.

B/2 Pfropfkautschuk, aufgebaut aus

- $\beta_1$) 80 Gew.-% einer Pfropfgrundlage aus
  - $\beta_{11}$) 99 Gew.-% Butadien und
  - $\beta_{12}$) 1 Gew.-% t-Dodecylmercaptan

  und
- $\beta_2$) 20 Gew.-% einer Pfropfauflage aus
  - $\beta_{21}$) 75 Gew.-% Styrol und
  - $\beta_{22}$) 25 Gew.-96 Acrylnitril

Nach Herstellung der Pfropfgrundlage durch Emulsionspolymerisation in an sich bekannter Weise, wurden die Teilchen mit einem $d_{50}$-Wert von etwa 0,1 µm (d.h. jeweils 50 Gew.-% der Teilchen haben einen Durchmesser von weniger bzw. mehr als 0,1 µm) durch Zugabe von 4 Gew.-% einer wäßrigen Dispersion eines Copolymeren aus 96 Gew.-% Ethylacrylat und 4 Gew.-% Methacrylamid agglomeriert, wonach der $d_{50}$-Wert bei 0,35 µm lag. Die anschließende Pfropfung erfolgte in an sich bekannter Weise, in Anlehnung an EP-A 22 216.

B/3 analog B/2, jedoch mit einem Gewichtsverhältnis von $ß_1 : ß_2 = 60 : 40$ und von $ß_{21} : ß_{22} = 70 : 30$

C Copolymer aus Styrol und Acrylnitril in Gew.-Verh. 65 : 35 mit einer Viskositätszahl von 80 $cm^3/g$, gemessen in 0,5 gew.-%iger Lösung in Dimethylformamid bei 25° C.

D Glasfasern

VP1 Auf einem Extruder wurde eine Mischung aus B/1 und C im Gewichtsverhältnis von 1 : 1 hergestellt und nach Extrusion granuliert.

VP2 Auf einem Extruder wurde eine Mischung aus A/3 und B/2 im Gewichtsverhältnis 4 : 1 hergestellt.

VP3 Auf einem Extruder wurde eine Mischung aus 45 Gew.-% B/3 und 55 Gew.-% C hergestellt.

Diese Komponenten wurden anschließend in einem weiteren Extruderdurchgang bei 260° C gemischt und granuliert.

Das so erhaltene Produkt wurde anschließend einer thermischen Behandlung unterworfen.

Aus den so erhaltenen Massen wurden die zur Bestimmung der Schlagzähigkeit ($a_n$) (nach DIN 53 453), der Lochkerbschlagzähigkeit ($a_{kl}$) (nach DIN 53 753), der Kerbschlagzähigkeit ($a_k$) (nach DIN 53 453) und der Schädigungsarbeit ($W_{ges}$) an 2 mm Rundscheiben (nach DIN 53 443) erforderlichen Testkörper in Spritzguß hergestellt (Massetemperatur 260° C, Formtemperatur 80° C).

Die Ergebnisse dieser Bestimmungen sind der Tabelle zu entnehmen.

Erläuterungen zur Tabelle:

1 thermische Behandlung des Produkts 3 h bei 190° C und 20 h bei 215° C unter Stickstoff
2 thermische Behandlung des Produkts 3 h bei 190° C und 48 h bei 215° C unter Stickstoff
3 thermische Behandlung des Produkts 48 h bei 208° C unter Stickstoff
V = Vergleichsbeispiel

Tabelle

| Bsp. | Zusammensetzung A/1 | A/2 | A/3 | A/4 | VP1 | VP2 | VP3 | C | D | thermische Behandlung | $a_n$ (23°C) KJ/m² | $a_k$ (23°C) KJ/m² | $a_{kl}$ (23°C) KJ/m² | $W_{ges}$ (23°C) Nm |
|---|---|---|---|---|---|---|---|---|---|---|---|---|---|---|
| 1 | 30 | | | | 70 | | | | | 1 | kein Bruch | 29 | 76 | 52 |
| 2 | 30 | | | | 70 | | | | | 2 | kein Bruch | 43 | 82 | 53 |
| 3V | 30 | | | | 70 | | | | | - | 16 | 0,6 | 7 | 0,7 |
| 4 | | 30 | | | 70 | | | | | 1 | - | 9 | 65 | 56 |
| 5 | | 30 | | | 70 | | | | | 2 | - | 16 | 71 | 61 |
| 6V | | 30 | | | 70 | | | | | - | - | 5 | 48 | 42 |
| 7V | | | 30 | | 70 | | | | | - | - | 11 | - | - |
| 8V | | | | 30 | 70 | | | | | - | - | 8 | - | - |
| 9 | 10 | | | | 90 | | | | | 1 | - | 30 | - | - |
| 10 | 10 | | | | 90 | | | | | 2 | - | 33 | - | - |
| 11V | | | 10 | | 90 | | | | | - | - | 9 | - | - |
| 12V | | | | 10 | 90 | | | | | - | - | 12 | - | - |
| 13V | 100 | | | | | | | | | - | 5 | 0,4 | - | - |
| 14V | | 100 | | | | | | | | - | kein Bruch | 4 | - | - |
| 15V | | | 100 | | | | | | | - | - | <2 | - | - |
| 16V | | | | 100 | | | | | | - | - | <2 | - | - |
| 17V | | | | | 100 | | | | | - | - | 17 | - | - |
| 18 | 45 | | | | | | 55 | | | 3 | - | 21 | - | - |
| 19V | 45 | | | | | | 55 | | | - | - | 2 | - | - |

Tabelle ff.

| Bsp. | Zusammensetzung A/1 | A/2 | A/3 | A/4 | VP1 | VP2 | VP3 | C | D | thermische Behandlung | $a_n$ (23°C) KJ/m² | $a_k$ (23°C) KJ/m² | $a_{kl}$ (23°C) KJ/m² | $W_{ges}$ (23°C) Nm |
|---|---|---|---|---|---|---|---|---|---|---|---|---|---|---|
| 20 | | | | | 30 | 70 | | | | 3 | - | 31 | - | - |
| 21V | | | | | 30 | 70 | | | | - | - | 4 | - | - |
| 22 | | | | | 18 | 70 | | 12 | | 3 | - | 21 | - | - |
| 23V | | | | | 18 | 70 | | 12 | | - | - | 5 | - | - |
| 24 | 49 | | | | 21 | | | | 30 | 3 | 34 | 11 | 17 | - |
| 25V | | | | 49 | 21 | | | | 30 | - | 12 | 6 | 7 | |
| 26 | 38,5 | | | | 31,5 | | | | 30 | 3 | 29 | 10 | 16 | |
| 27V | | | | 38,5 | 31,5 | | | | 30 | - | 14 | 6 | 7 | - |
| 28 | 21 | | | | 49 | | | | 30 | 3 | 25 | 11 | 16 | - |
| 29V | | | | 21 | 49 | | | | 30 | - | 14 | 5 | 7 | |

Die Ergebnisse zeigen die vorteilhaften Eigenschaften der erfindungsgemäßen Formmassen, insbesondere bei der Verwendung von Polyester A/1 mit einer viskositätszahl im Bereich von 40 - 80 $cm^3/g$.

## Ansprüche

1. Thermoplastische Formmassen, erhältlich durch thermische Behandlung einer Mischung aus

A) 5 bis 90 Gew.-% eines Polyesters

B) 0 bis 90 Gew.-% eines Pfropfpolymerisats aufgebaut aus
$b_1$) 30 bis 90 Gew.-% einer Pfropfgrundlage aus einem kautschukelastischen Polymeren mit einer Glasübergangstemperatur von unter 0 °C
$b_2$) 10 bis 70 Gew.-% einer Pfropfauflage aus
$b_2$) 50 bis 90 Gew.% Styrol oder substituierten Styrolen der allgemeinen Formel I

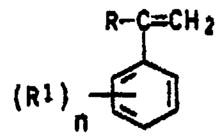

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen,
$b_{22}$) 10 bis 50 Gew.% Acrylnitril oder Methacrylnitril oder deren Mischungen
$b_{23}$) 0 bis 30 Gew.% eines polymerisierbaren Monomeren mit Carboxyl-, Carboxylderivat-, Hydroxyl- oder Epoxygruppen,
und
C) 5 bis 90 Gew.% eines Copolymerisats aus
$c_1$) 50 bis 90 Gew.% Styrol oder substituierten Styrolen der allgemeinen Formel I oder deren Mischungen und $c_2$) 10 bis 49 Gew.% Acrylnitril oder Methacrylnitril oder deren Mischungen,
$c_3$) 0 bis 30 Gew.% eines polymerisierbaren Monomeren mit Carboxylderivat-, Hydroxyl- oder Epoxygruppen,
und

D) 0 bis 50 Gew.% faser- oder teilchenförmige Füllstoffe oder deren Mischungen
bei einer Temperatur im Bereich von 50 °C unterhalb bis 100 °C oberhalb des Schmelzpunkts der Komponente A) über einen Zeitraum von 10 min -100 Stunden.

2. Thermoplastische Formmassen nach Anspruch 1, dadurch gekennzeichnet, daß die Pfropfgrundlage $b_1$) aufgebaut ist aus
$b_{11}$) 95 bis 99,5 Gew.% n-Butylacrylat und/oder 2-Ethylhexylacrylat und
$b_{12}$) 0,1 bis 5 Gew.% eines di- oder trifunktionellen Monomeren.

3. Thermoplastische Formmassen nach Anspruch 1, dadurch gekennzeichnet, daß die Pfropfgrundlage $b_1$) aufgebaut ist aus
$b_{13}$) 50 - 100 Gew.-% eines konjugierten Diens
$b_{14}$) 0 - 50 Gew.% Styrol, Acrylnitril, Methacrylnitril und/oder $C_1$-$C_8$-Alkylestern der Acrylsäure oder Methacrylsäure und
$b_{15}$) 0 - 5 Gew.-% eines vernetzenden Monomeren

4. Verwendung der thermoplastischen Formmassen gemäß den Ansprüchen 1 - 3 zur Herstellung von Fasern, Folien und Formkörpern.

5. Formkörper, erhältlich aus thermoplastischen Formmassen gemäß den Ansprüchen 1 - 3.